# EUROPEAN PATENT APPLICATION

(11) **EP 3 598 356 A1**
(43) Date of publication of application: **22.01.2020**
(21) Application number: 19186659.9
(22) Date of filing: 16.07.2019
(51) Int. Cl.: G06Q 10/06

(54) **A SYSTEM AND METHOD FOR A BLOCKCHAIN BASED AUTOMATED CERTIFIABLE WORKFLOW PROCESS**

(30) Priority: 20.07.2018 IN 201841027251; 05.09.2018 US 201816121993
(71) Applicant: Honeywell International Inc., Morris Plains, NJ New Jersey 07950 (US)
(72) Inventor: RAO, Sujay, Morris Plains, NJ New Jersey 07950 (US); KAR, Satyanarayan, Morris Plains, NJ New Jersey 07950 (US); CHOURASIA, Mritunjay, Morris Plains, NJ New Jersey 07950 (US); REKULA, Dinesh, Morris Plains, NJ New Jersey 07950 (US)
(74) Representative: LKGlobal UK Ltd.

(57) **Abstract**

A method and system for implementing a blockchain network for distributing at least maintenance information related to an aircraft service between a plurality of trusted agents including: executing permissions by each of the trusted agents to participate in the blockchain network to interconnect amongst each other to perform a series of actions of with the blockchain network; and orchestrating a maintenance workflow in the blockchain network to provide functions in the blockchain network wherein the maintenance workflow further includes: inputting data for a current activity related to the aircraft service, retrieving a maintenance procedure for the current activity from a maintenance store of procedures, creating a current maintenance work order based on a retrieved maintenance procedure; identifying a trusted agent to inspect maintenance service from the current maintenance work order, and validating by the trusted agent a satisfactory completion of the current maintenance work order.

## Description

### TECHNICAL FIELD

Embodiments of the subject matter described herein relate generally to aviation management systems for aircraft maintenance, and more particularly, embodiments of the subject matter relate to a system and method for an automated certifiable validation process via a permissioned blockchain network with deployable instructions and workflows to both internal and external entities in an aircraft maintenance network.

### BACKGROUND

The aircraft maintenance management process is a highly regulated, safety critical and complex procedure. The aviation and aerospace industries are characterized by complex decentralized workflows which are distributed among multiple organizations with stringent regulatory requirements due to the size and impact played by the industry in the consumer, commercial and military industries. This process of complex interdependent systems and organizations, and legally binding task procedures with reams of documentation creating paper trails to ensure proper compliance and to enable auditing of records in each step of the process by various parties in the network to ensure validations, reliability, efficiency and safety at all times. Thus, aircraft maintenance activity requires a sustained coordination, communication and cooperation between different work groups including in the network of: aircraft maintenance engineers (AMEs), crew managers, inspectors and hangar managers; external bodies, such as the regulators, the manufacturer; the customer and the airlines; and various other support systems such as planning and commercial, stores, quality and engineering

In addition, the volumes of documentation associated with maintenance, repair, and overhaul organizations (MROs) compound problem. Where each aircraft must be maintained by maintenance documentation specific to the aircraft owner and registry number. This entails that an MRO is likely to have multiple different work instructions for each aircraft in the shop, even though the aircrafts are of the same type. This requires that air carrier/airline operators supplement the manufacturer's manuals with company specific instructions, checklists, job cards, and other company customized documenting and reporting material. For example, to accomplish such tasks, some companies may use computer-based maintenance documents with varying degrees of user friendliness because of having to add-on or customize systems not already configured with the necessary custom feature sets for these tasks. Also, the volumes of documentation associated with Maintenance, Repair, and Overhaul organizations (MROs) in themselves can be problematic when trying to digitize and integrate into the appropriate application solution. The deficiencies result often in an unreliable, error prone maintenance system that does not install sufficient confidence in the user parties with glitches, failing to succeed in achieving significant or sufficient reductions in labor savings, and that likely can result in high turnaround time and inferior operation experiences. Thus, building an efficient aircraft maintenance workflow, which cuts across the organization boundaries is imperative for efficiency and cost savings.

Accordingly, it is desirable for improving both the performance and robustness of the maintenance service by using a fully/semi-automated set of certified activities for automatically certifying, updating, and validating various steps in an aircraft maintenance process by use of a blockchain network. Furthermore, other desirable features and characteristics will become apparent from the subsequent detailed description and the appended claims, taken in conjunction with the accompanying drawings and the foregoing technical field and background.

### BRIEF SUMMARY

Some embodiments of the present disclosure provide a method and system for certifying, updating, and validating various steps in an aircraft maintenance process for distributing at least maintenance information related to an aircraft service between a plurality of trusted agents.

In one embodiment, a system for administering aircraft maintenance and verification, usable by a plurality of different entities each having different roles and each employing at least one computing device capable of networked communication in provided. The system includes: a blockchain network configured for permissioned use by the plurality of different entities via networked communication; the blockchain network storing at least one deployable workflow as a data structure specifying aircraft maintenance and verification-related activities and associated validation rules to be performed by at least selected ones of the plurality of different entities; a distributed rule processing engine deployed across the plurality of different entities and hosted at least in part by the at least one computing device of each of the plurality of different entities; the distributed rule processing engine hosted on the at least one computing device at each of the plurality of different entities implementing a workflow processing engine having: an activity interpreter processing engine that accesses the blockchain network on behalf of a hosting entity to retrieve the at least one deployable workflow, to select and perform at least one activity designated for the hosting entity and to cause a transaction record to be written to the blockchain corresponding to the performed activity; and an activity verifier processing engine that that accesses the blockchain network on behalf of a validation compliance entity to retrieve at least one validation rule, to select and perform at least one validation rule and to cause a transaction record to be written to the blockchain corresponding to the results of performance of the at least one validation rule.

In various embodiments, the system includes: the workflow engine configured to access a plurality of administrative tools to convert a set of verification rules to a machine readable format for processing by the activity interpreter processing engine and activity verifier processing engine to manage maintenance activities of a trusted agent of each validation entity. The system, includes: the activity verifier processing engine to execute the set of verification rules to regulate a current activity enabled by the machine verification activities to enable an administering of an availability of the trusted agent of each validation entity for a current activity by completing a set of actions comprising: a validation of an approval by the trusted agent for each set of actions wherein the validation requires at least one level of approval by the trusted agent. The system, further includes: the activity processing engine deployed within each validation entity executing by a file associated with each activity processing engine of a set of machine readable inter-task functions for at least each scheduled current activity which comprise: a remote loading of loadable software aircraft parts (LSAP) with multiple tasks associated with each maintenance procedure. Each validation entity is at least one or more of a set of trusted agents for accessing the blockchain network which comprise: a repository, an aircraft server, a maintenance mechanic, an inspector, a maintenance facility, an aircraft owner, an OEM, and a regulator. The system, further includes: the activity orchestrator application of the workflow processing engine to schedule inter-task functions for a current activity in the blockchain network wherein the inter-task functions comprise: checking software updates, staging software uploads, triggering software loads, confirming loads, and uploading templates. The system, further includes: the activity orchestrator application reading a distributed ledger, by a plurality of adapters, associated with at least one validation entity in the blockchain network. The system, further includes: associating, a set of rule tools, to convert maintenance workflows and rules into a machine readable format for processing to a workflow engine and for validating data for compliance, automating procedures, generating records, and creating reports.

In another embodiment, a system implementing a blockchain network for distributing at least maintenance information related to an aircraft service is provided. The system includes: a plurality of trusted agents executing permissions to participate in the blockchain network to interconnect amongst each other to perform a series of actions at least including: accessing, reading and writing transactions associated with the blockchain network; and a multi-layer workflow architecture for the blockchain network including: a first layer for creating permissions for the blockchain network, a second layer for orchestrating the workflow of the blockchain network, and a third layer for interfacing with the blockchain network and a distributed ledger, wherein the first layer further includes: an activity interpreter engine using a set of machine interpretable activity bytecodes to provide functions in the blockchain network to input data for a current activity related to the aircraft service and to identify a particular trusted agent for the current activity, and an activity verifier engine using another set of machine interpretable activity bytecodes to identify the trust agent with permissions to approve a particular activity, determine a validation mechanism, and validate the inputted data, wherein the second layer further includes: an activity orchestrator with machine readable inter-task functions to schedule the current activity from a plurality activities in the blockchain network, wherein the third layer further includes: a plurality of adapters to read data from a distributed ledger of the blockchain network associated with each trusted agent and to interface with at least the activity interpreter and verifier engines.

In various embodiments, the system, further includes: a plurality of administrative tools to manage the trusted agents and to convert a set of verification rules to a machine readable format for processing by the activity interpreter and verifier engines. The system, further includes: a framework configured for the activity verifier engine to execute the set of verification rules which regulate a current activity enabled by the set of machine verification bytecodes to administer availability of one or more trusted agents of the plurality of trusted agents to enable the current activity by completing of a set of actions by the activity verifier engine including: a validation of an approval of each set of actions by the trusted agent wherein the validation requires at least one level of approval by the trusted agent. The system, further includes: a set of inter-task functions deployed by the activity interpreter engine for at least each scheduled current activity which include: a remote loading of loadable software aircraft parts (LSAP) with multiple tasks associated with each maintenance procedure. The trust agent is at least one or more of a set of trusted agents for accessing the blockchain network which includes: a repository, an aircraft server, a maintenance mechanic, an inspector, a maintenance facility, an aircraft owner, an OEM, and a regulator. The system further includes: an activity orchestrator for scheduling inter-task functions for the current activity in the blockchain network wherein the inter-task functions include: checking software updates, staging software uploads, triggering software loads, confirming loads, and uploading templates. The system further includes: a distributed ledger, associated with at least one trusted agent in the blockchain network, configured for reading by at least one of the plurality of adapters. The system further includes: a configuration of the set of tools for processing data to a workflow engine to enable activities of validating data for compliance, automating procedures of the blockchain network, generating records of data, and creating reports of results of processed data.

In yet another embodiment, a method for administering aircraft maintenance and verification, usable by a plurality of different entities each having different roles and each employing at least one computing device capable of networked communication is provided. The method includes: configuring a blockchain network for permissioned use by the plurality of different entities via networked communication; storing, in the blockchain network, at least one deployable workflow as a data structure specifying aircraft maintenance and verification-related activities and associated validation rules to be performed by at least selected ones of the plurality of different entities; deploying a distributed rule processing engine across the plurality of different entities and hosted at least in part by the at least one computing device of each of the plurality of different entities; hosting the distributed rule processing engine on the at least one computing device at each of the plurality of different entities implementing a workflow processing engine having: accessing, by an activity interpreter processing engine, the blockchain network on behalf of a hosting entity to retrieve the at least one deployable workflow, to select and perform at least one activity designated for the hosting entity and to cause a transaction record to be written to the blockchain corresponding to the performed activity; and accessing, by an activity verifier processing engine, the blockchain network on behalf of a validation compliance entity to retrieve at least one validation rule, to select and perform at least one validation rule and to cause a transaction record to be written to the blockchain corresponding to the results of performance of the at least one validation rule.

In various embodiments, the method includes: configuring the workflow engine to access a plurality of administrative tools to convert a set of verification rules to a machine readable format for processing by the activity interpreter processing engine and activity verifier processing engine to manage maintenance activities of a trusted agent of each validation entity. The method, further includes: executing, by the activity verifier processing engine, the set of verification rules to regulate a current activity enabled by the machine verification activities to enable an administering of an availability of the trusted agent of each validation entity for a current activity by completing a set of actions comprising: a validation of an approval by the trusted agent for each set of actions wherein the validation requires at least one level of approval by the trusted agent. The method, further includes: executing, by the activity processing engine deployed within each validation entity, a file associated with each activity processing engine of a set of machine readable inter-task functions for at least each scheduled current activity which comprise: a remote loading of loadable software aircraft parts (LSAP) with multiple tasks associated with each maintenance procedure wherein each validation entity is at least one or more of a set of trusted agents for accessing the blockchain network which comprise: a repository, an aircraft server, a maintenance mechanic, an inspector, a maintenance facility, an aircraft owner, an OEM, and a regulator.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 illustrates an exemplary maintenance workflow diagram of orchestrated activities distributed about multiple entities of a maintenance workflow in the blockchain network in accordance with an embodiment;
FIG. 2 illustrates a record for certifying particular orchestrated activities by entities of a maintenance workflow in the blockchain network in accordance with an embodiment in accordance with an embodiment;
FIG. 3 illustrates an exemplary regulatory requirement of a particular entity for a repair or alteration of a maintenance procedure of aircraft in a maintenance workflow in the blockchain network in accordance with an embodiment;
FIG. 4 illustrates an exemplary maintenance workflow diagram of a TrustFlow blockchain network of orchestrated activities distributed about multiple entities of a maintenance workflow in accordance with an embodiment;
FIG. 5 illustrates an exemplary maintenance workflow diagram of a TrustFlow blockchain network of orchestrated activities distributed about agents of a maintenance workflow in accordance with an embodiment;
FIGS. 6A and 6B illustrate an exemplary maintenance workflow diagram of orchestrated activities distributed about multiple entities of a maintenance workflow in the blockchain network in accordance with an embodiment;
FIG. 7 illustrates an exemplary architecture for the maintenance workflow of a TrustFlow blockchain network of orchestrated activities distributed about agents in accordance with an embodiment;
FIG. 8 illustrates a flowchart to deploy a service bulletin for the maintenance workflow of a TrustFlow blockchain network of orchestrated activities distributed about agents in accordance with an embodiment;
FIG. 9 illustrates a flowchart of the implementation of the workflow in the maintenance flow of the TrustFlow blockchain network of orchestrated activities distributed about agents in accordance with an embodiment;
FIG. 10 illustrates a flowchart of an "Exemplary" workflow in an LSAP maintenance installation/update of the TrustFlow blockchain network of orchestrated activities distributed about agents in accordance with an embodiment;
FIG. 11 illustrates a diagram of an activity or task in the maintenance flow of the TrustFlow blockchain network related to the orchestrated activities for generating data of the TrustFlow blockchain network in accordance with an embodiment;
FIG. 12 illustrates a diagram of distributed sets of networks of nodes of entities related to the orchestrated activities for generating data of the TrustFlow blockchain network in accordance with an embodiment;
FIG. 13 illustrates an architecture diagram of a configuration of a trusted agent related to the orchestrated activities for generating data of the TrustFlow blockchain network in accordance with an embodiment;
FIG 14. illustrates a diagram of software contents of a trusted agent related to the orchestrated activities for generating data of the TrustFlow blockchain network in accordance with an embodiment;
FIG. 15 illustrates a diagram of a deployable maintenance work procedure related to the orchestrated activities for generating data of the TrustFlow blockchain network in accordance with an embodiment;
FIG. 16 a functional table of a work procedure related to the orchestrated activities for generating data of the TrustFlow blockchain network in accordance with an embodiment;
FIG. 17 illustrates a flowchart of the implementation of the workflow engine in the maintenance flow of the TrustFlow blockchain network of orchestrated activities distributed about agents in accordance with an embodiment;
FIGS. 18A and 18B illustrates steps in a flowchart of the TrustFlow blockchain network of orchestrated activities distributed about agents in accordance with an embodiment;
FIG. 19 illustrates a configuration table for an automated procedure of the workflow engine in the maintenance flow of the TrustFlow blockchain network of orchestrated activities distributed about agents in accordance with an embodiment;
FIG. 20 illustrates a digital record for an automated procedure of the workflow engine in the maintenance flow of the TrustFlow blockchain network of orchestrated activities distributed about agents in accordance with an embodiment;
FIG. 21 is a network diagram of the TrustFlow blockchain ledger with the communication network aircraft related to the orchestrated activities for generating data of the TrustFlow blockchain network in accordance with an embodiment; and
FIG. 22 is a functional block diagram of a computing device related to the client for the orchestrated activities for generating data of the TrustFlow blockchain network in accordance with an embodiment.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

In various exemplary embodiments, the TrustFlow may refer to software platform service layer, whose core attributes are based on a detectable distributed ledger, which allows deployment on mobile devices, desktops, the cloud for connectivity's to underlying service processes beneath for example a service stack. The TrustFlow may be considered akin to permissioned block chain Network Engine that is configured with Deployable certified Validation Instructions sets to enable workflow automation, Deployable Workflows and is Supported by Tools sets To create both deployable Instructions and deployable workflows for Network Administration, Roles Management, Authentication services, Archival Interfaces and Interfaces to Customer databases.

Numerous missteps have been found when complying with procedures and regulation for aircraft maintenance related various entities use of aviation documentation in an aircraft maintenance network. For example, often technicians make minor error in simple task associated with filling out and use of documentation for certifying maintenance repairs as well as failing to follow properly written procedures as is often reported in aircraft accident reports by the National Transportation Safety Board (NTSB). In addition, various FAA study that was focused on major malfunctions also highlights this issue. In an exemplary example of such a study, the failure to comply with maintenance documentation was the number one reason for aircraft malfunction. The rationale put forth was given the huge amount of paper-based documentation required to comply with maintenance procedures, there can be found a high probability that the maintenance history for an aircraft will or may not be complete, as often is the case that not all relevant or correct documents can be found. The conclusion reached by such studies is that by sticking to paper-based processes requiring operators to invest significant effort to complete, to manage in record keeping and for continuously providing regulatory compliance is unproductive and unduly burdensome. Moreover, during transfer between different systems, even with digital record derived from paper records there can be data loss or other errors. Hence, there is a need to solve the following inherent inefficiencies in aviation workflows procedures and documentation requirements that overcomes such issues and results in increases in the maintenance turnaround around time of aircrafts and lesser costs associated with the necessary regulatory compliance.

In various exemplary embodiments, the present disclosure describes a blockchain TrustFlow network that enables a distributed system and methodology across various organizations (e.g. inter/intra maintenance related entities) which enables review and acceptance which is spread out in multiple locations. In addition, presents a proof of compliance of completion of the work element as per established safety rules/procedures and also can meet several sets of requirements including maintaining multiple copies as per regulatory authorities. In addition, preventing the Referencing the wrong document (e.g. picking an older Service bulletin which have been superseded by updated or new documentation).

In various exemplary embodiments, the present disclosure describes systems and methodology that enable sharing of data for safety and connecting current disparate or legacy systems to exchange specific/required information while maintaining a level of control (private /shared /public) for the information between organizations are difficult and are a deterrence to digitization or for leading to sub-optimum solutions.

In various exemplary embodiments, the present disclosure describes a Certifiable Trusted Workflow Automation process. In various exemplary embodiments, the present disclosure describes: a private permissioned blockchain network, a set of configurable Network rules within the blockchain network to enable a set of deployable workflow contracts based on trusted elements like Service bulletins, a set of task transactions based on workflow contracts, which ensure an automated tamper proof record generation of sub task.

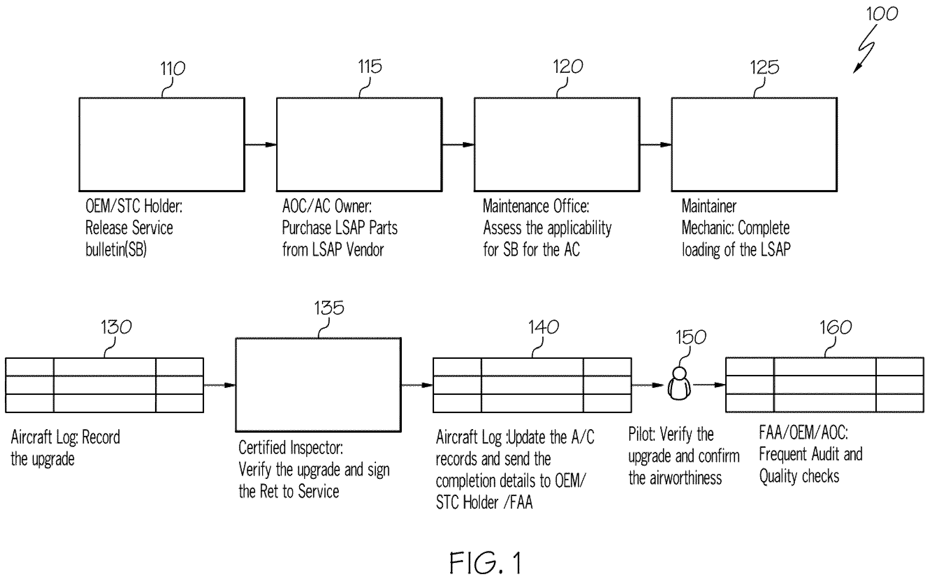

FIG. 1 illustrates an exemplary maintenance workflow diagram 100 of orchestrated activities distributed about multiple entities of a maintenance workflow in the blockchain network in accordance with an embodiment. FIG. 1 depicts an exemplary maintenance workflow for orchestrated activities of a blockchain maintenance network distributed across multiple organizations. The maintenance workflow diagram 100 receives the original equipment manufacturer (OEM)/supplemental type certificate (STC) release service bulletins that instigates the process of loading and installing the LSAPs at 110. The service bulletins include the following information: the aircraft and hardware applicability, the verification procedures to assure that the software were correctly loaded into an approved and compatible target computers; any post load verification and/or test procedures required to show compliance with the guidelines specified in this section of the Certification Memorandum; the actions to be taken in the event of an unsuccessful load (for example, to prohibit the dispatch of the aircraft); the reference to an approved loading procedure; the maintenance record entry procedures required to maintain configuration control; and the reference to the Aircraft Flight Manual or Operations Manual of the aircraft, as appropriate.

Alternately, the OEM or Vendors may notify operators of the Software upgrades through one of several other instruments, aside from Service Bulletins (SB), these notifications may come from instruments that include engineering orders, service letters (SL), vendor notifications and OEM specific communications.

The Table 1.0 below describes various benefits in exemplary embodiments described by converting written instruments of service bulletins to digital documents to facilitate the necessary software upgrades in aircrafts described by the service bulletins as well to maintain integrity with software updates when installed in the aircraft systems.

| Problem Area | Exemplary Embodiments Described |
|---|---|
| Service Bulletin comes as documents which are assimilated by Operator change management team. | SB is encoded as the executable code (smart contract) in the BC network. Assessment of the applicability is automatically determined by the network |
| Assess applicability and constraints for their fleet. | |
| Onboard Manual Software upgrades some of which take long time (sometimes >1 hour). | Maintenance node takes care of securely loading of LSAPs. The successful completion of this task is endorsed by the participating nodes in the network. |
| Authorized Maintainers carry the software parts to the aircraft. Download the Software as per the instructions in the service bulletin. This is constrained by geographies and authorized maintainers. | |
| Onboard Manual Inspections which requires authorized/certified and independent inspection. Authorized Maintainers verify if the software parts has been upgraded authorized for the specified aircraft. This is constrained by geographies and authorized maintainers, where different laws applies. | This step is not required. Endorsements by the participating nodes ensure the verification. |
| Maintaining consistent tamper proof Aircraft records updates for the entire life cycle of the aircraft. Most commonly manual updates to the paper records is used. Managing consistently the integrity of the records without losing these for long durations is a problem. | Auto generated digital distributed ledger. Collaboration without compromising on proprietary systems |

The air operator certificate (AOC)/Owner at 115 after the notification from the information of the service bulletin, may order both the software and hardware part numbers that stipulate which software update is to be loaded into the loadable software parts and loadable hardware (LRU). For an airline to operate and maintain an aircraft having these loadable systems/software, in various exemplary examples, the following processes should be implemented which is not always achievable. Initially, a procurement of Loadable software parts and Loadable (LRU) is required which involves ordering loadable software Parts and relevant LRUs from an original equipment manufacturer (OEM) by listing out the software parts to be loaded into the LRU. Also needed are Software Libraries Management: airline operators require a well-established and maintained software library, for maintaining Loadable software parts spares and updated software as a part requiring a software changes can happen without notice. Also needed, is a preload Loadable Software Parts into Loadable LRU of the Aircraft: When a loadable LRU is replaced, the Loadable software certified for the Aircraft should be loaded into the incoming LRU. The operator can achieve this by requesting suppliers to perform the same or by performing in their own maintenance shops using shop loading equipment. Finally, a conformance of Loadable Software Configuration with Authorized Aircraft Configuration: This requires the operator maintain record of all the loadable software parts available in an Aircraft and its conformance with the approved Aircraft configuration. Such a process should also ensure that, all the changes undergone for loadable software parts arising out of the Service Bulletin are documented and readily available for any regularity authority inspections.

That said, the Airline Operator is the responsible entity for implementing procedures to control updates and modifications to loadable systems, occurring after the airplane has been delivered. The part numbers of the software loaded into a loadable system are part of the type certificate of the airplane. The operator must ensure that the configuration control documentation for each airplane reflects the current configuration of loadable software parts, and that the loadable software parts are certified for the airplane on which the updates are installed.

At 120, the maintenance office may assess the applicability for the SB for the air certificate (AC). Next, at 130 the aircraft log records the upgrade. Here, inadequate records have been a constant problem identified by FAA resulting in operators spending substantial money to keep the records up to date. Like any parts on the aircraft, records have to be maintained for LSAP installation to meet the stringent safety requirements imposed in the industry.

The records are needed to match the actual aircraft configuration and there should be no discernable configuration discrepancies to ensure the operator will get the necessary AC without obstacles. At 135, the certified inspector(s) may verify the upgrade and sign the return to service notice. In order to mitigate risk to network security of the onboard systems of the aircraft, the off-airport supporting infrastructure and links in between must include wired and wireless connectivity to ensure no public or unauthorized access. This ensures that data security protection is sufficient to prevent access by unauthorized devices or personnel external to the aircraft. Additionally, the wired and wireless connected pipeline ensures that security threats specific to the certificate holder's operations are identified and assessed, and that risk mitigation strategies are implemented to ensure the continued airworthiness of the aircraft. That is, steps are taken to prevent inadvertent or malicious changes to the aircraft network, including those possibly caused by maintenance activity. Also, unauthorized access from sources onboard the aircraft is also prevented by this wired and wireless connected architecture. Next, at 150, the pilot verifies the upgrade and confirms airworthiness. Finally, at 160 the FAA/OEM/AC frequently audit and quality check the records to ensure that the aircraft meets the proper requirements.

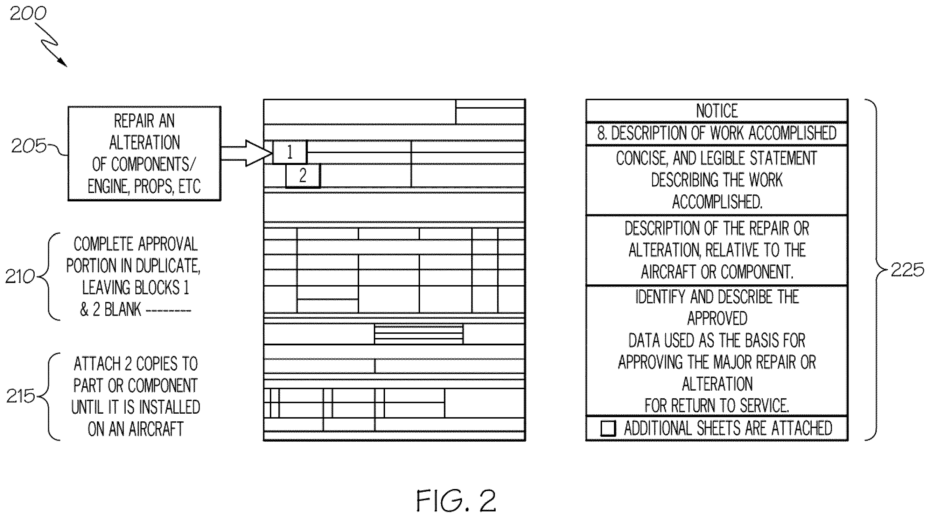

FIG. 2 illustrates a record for certifying particular orchestrated activities by entities of a maintenance workflow in the blockchain network in accordance with an embodiment in accordance with an embodiment. In FIG. 2 there is shown an exemplary example of a regulatory record 200. The regulatory record 200 is a document designed to record signature validation of multiple entities for recordation, for evidence proof of compliance and retaining for internal and external (i.e. regulatory agencies) auditing for compliance with aircraft maintenance procedures. In this instance, the regulatory record 200 illustrated as a single paper file which is updated by multiple parties that validate proposed activities, perform proposed activities and certify or validate performance of the activities in an aircraft maintenance in the work flow required for compliance. In an exemplary embodiment, the regulatory record 200 may include a section 205 of proposed "REPAIR AND ALTERATION OF COMPONENTS/ENGINE, PROPS, etc.."; a section 210 labeled "COMPLETE APPROVAL PORTION IN DUPLICATE" for indicating a completion of the repair and/or alteration and in duplicate to retain multiple copies for notice to each respective entity or party in the workflow. Next, a section 215 is labeled "ATTACH 2 COPIES TO PART OR COMPONENT UNTIL IT IS INSTALLED ON AN AIRCRAFT"; in other words, the regulatory record 200 requires a notice by directing at least two copies attached to the part or component of the repair and/or alteration necessitated by the particular maintenance activities. That is, a physical copy of the necessitated or contemplated repair is attached to the component so that the maintenance technician is aware of the repair and the component to be used. On page 225 of the regulatory record, are instructions on how to fill out the regulatory record 200 as an exemplary example, by a set of statements as follow of: "CONCISE, AND LEGIBLE STATEMENT DESCRIBING THE WORK ACCOMPLISED", "DESCRIPTION OF THE REPAIR OR ALTERATION, RELATIVE TO THE AIRCRAFT OR COMPONENT"; and to "IDENTIFY AND DESCRIBE THE APPROVED DATA USED AS THE BASIS FOR APPROVING THE MAJOR REPAIR OR ALTERATION FOR RETURN TO SERVICE".

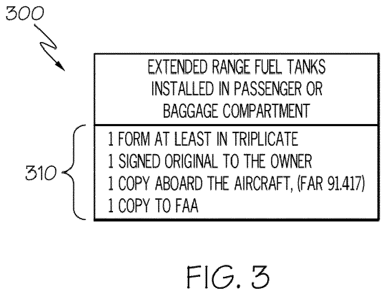

FIG. 3 illustrates an exemplary regulatory requirement of a particular entity for a repair or alteration of a maintenance procedure of aircraft in a maintenance workflow in the blockchain network in accordance with an embodiment. FIG. 3 describes an exemplary example of specific FAA requirement for managing a compliance regulatory record as described in FIG. 2. The use of such documentation may be considered inefficient and users may not be in compliance with the requirements on the form when manually entering the information. For example, if the user where to handwrite information which is illegible, the user may be required by the approving agency to re-write the information or make further revisions in the regulatory form to comply with the agency regulations or requirements to pass approval or comply with an audit. In FIG. 3 there are requirements 310 described of: triplicate form requirements, a signed original copy, a copy onboard the aircraft, and a copy sent to the FAA. Hence, the requirements can best be described as cumbersome that create additional burdensome task for completion of a maintenance service, repair, part replacement etc. Often is the case, that such deficiencies can result in error prone ad hoc maintenance, high turnaround times, and increased costs.

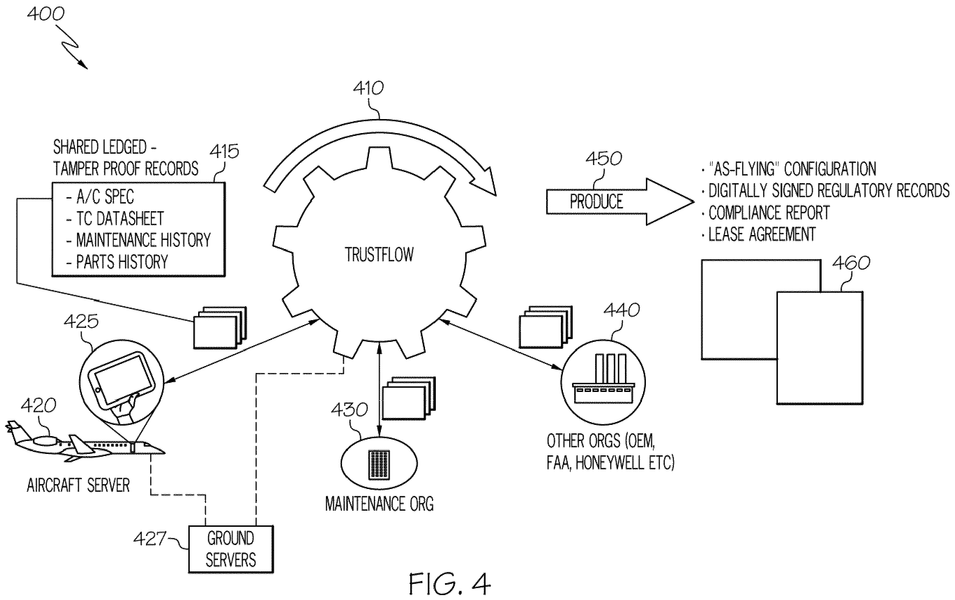

FIG. 4 illustrates an exemplary maintenance workflow diagram of a TrustFlow blockchain network of orchestrated activities distributed about multiple entities of a maintenance workflow in accordance with an embodiment. Each entity in the TrustFlow block chain network 400 will have one or more specific roles in the network to receive the record data into the network, validating the record data, generating data blocks of static data in the block chain ledger, and certifying the record data. FIG. 4 illustrates a connectivity of a TrustFlow blockchain network 400 in binding various parties and elements into an interdependent or symbiotic relationship when performing aircraft maintenance procedure to enable an automated workflow between each party and element. In various exemplary embodiments, the TrustFlow blockchain network 400 integrates all aspects associated with the maintenance workflow starting with a maintenance worker tool set to certifying and validating steps of intra/inter organizations within the network.

In various exemplary embodiments, in FIG. 4 a core mechanism and set of attributes of the workflow maintenance process can be described as follows: a TrustFlow Blockchain Network 400 is a blockchain network enabled to orchestrate and/or deploy a complex set of work procedures relating to maintenance tasks which can be distributed across specialized a set of TrustFlow network entities designated as trusted agents. The trusted agents have permissioned capabilities for interacting with manual/automated applications of the TrustFlow network. The Trusted Agents for example may include organizations 440 and users of the servers 420. The trusted agents will have established trustworthy digital identity as requirement to participate in the TrustFlow blockchain network 400. The trusted agents may also include automated applications hosted by servers 440 on onboard systems in an airplane that enable machine to machine communications, operators of portable devices 425 or applications/users associated with ground servers 427. The deployable TrustFlow may be considered an orchestration and a deployment of a set of parallel and dependent activities of complex workflows which have been established using activity tokens. The workflows can be spread across multiple inter/intra organizations. In an exemplary embodiment, this may entail the remote data loading of LSAP (Loadable Software Airplane Parts). The deployable rules of the TrustFlow blockchain network 400 can be established by authorized rules deployed in the specialized network, which can verify the outcome of the activities accomplished by the trusted agents. For example, a set of rules are of similar content to information found in a service bulletin which is typically a set of work instructions written in text and interpreted by a technician to verify for example a cyclic redundancy check (CRC) of a particular LSAP.

The review agents are agents that review the outcome of the activities is verified by participating review agents (manual/automated Apps) based on review agent consensus. In an exemplary embodiment, review agents may be considered inspectors of a maintenance organization 430 who match the task outcome with the information in a service bulletin. The Tamper Proof Records 415: The outcome of the reviewed activity is stored in the shared distributed ledger. An Up-to-date Compliance 450 of compliance records 460 can be generated anytime in the digital format with appropriate digital signatures retrieved from the distributed ledger. The TrustFlow Tools: The deployable machine readable (TrustFlow engine) work activities are prepared using offline specialized tools.

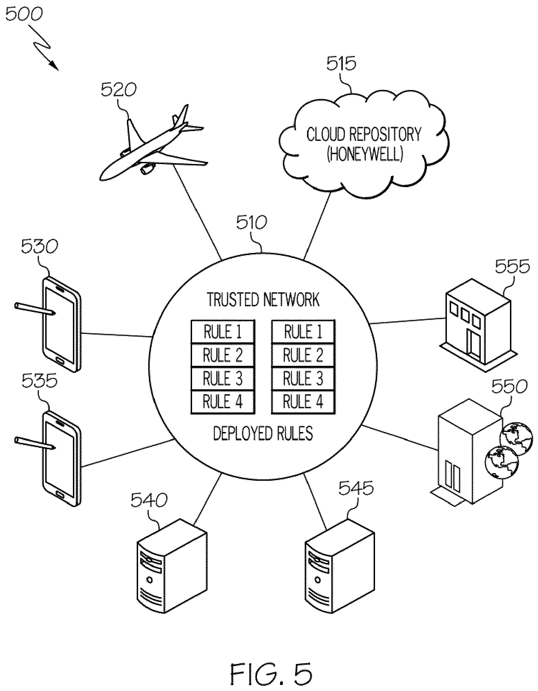

FIG. 5 illustrates an exemplary maintenance workflow diagram of a TrustFlow blockchain network of orchestrated activities distributed about agents of a maintenance workflow in accordance with an embodiment. In FIG. 5, in the TrustFlow diagram 500 there is shown a TrustFlow blockchain network 510 that includes a set of deployed rules with permissions per contracts issued with a set of trusted agents connected to the TrustFlow Blockchain network 510. That is, each of the trusted agents is governed by rules deployed in the TrustFlow blockchain network 510 which may or may not be same depending on access required, and validating and certifying levels approval provided to each trusted agent.

The TrustFlow diagram 500 includes the trusted agent 515 of a software application repository, a trusted agent 520 at an aircraft server, a trusted agent 530 of a maintenance mechanic, a trusted agent 535 of an inspector, a trusted agent 540 of a maintenance facility, a trusted agent 545 of an aircraft owner, a trusted agent 550 of an OEM, and a trusted agent 555 of a regulatory agency such as the FAA.

In various exemplary embodiments, stakeholders (not shown) may have rights to modify and generate the underlying roles and trusted work-flow contracts of the TrustFlow blockchain network 510. In addition, the rights, permissions or rules for each of the trusted agents may coincide with task permission to the respective trusted agent. For example, the trusted agent 520 of the aircraft server system may from the aircraft have permissions to broadcast a current configuration of the aircraft upon request from any number of parties having access to the network or a particular party with limited access for a given maintenance task.

In an exemplary embodiment of an loadable software airplane part (LSAP) installation or update in a maintenance repair, the trusted agent 540 of the maintenance facility may as an example initiate a particular LSAP installation and when completed may issue the return to service approval. After the return to service approval is issues, the trusted agent 555 of the regulatory agency may be given rights to either approve or reject the transactions based on normal weightage calculations. Next, the trusted agent 545 of the aircraft owner or operator may be permissioned with a necessitated higher approval to approve or reject the transactions based on a highest weightage. That is, a two-step weightage is implemented, where at a lower weightage no trusted agent 545 of an aircraft owner/operator input is required for approval or rejection and the decision making is given to the trusted agent 555 of the regulator or a trusted agent 535 of an inspector on the ground. In instances, an LSAP supplier of the trusted agent 550 is allowed limited rights to approve or reject a transaction related to the particular LSAP loaded. The trusted agent 545 of the aircraft owner can deploy the SB as a smart contract in the TrustFlow blockchain network 510 and approve or reject the transactions. In various exemplary embodiments, the LSAP distribution server of the trusted agent 515 may distribute to other aircrafts similar or duplicate software updates, LSAP loading procedures, and like information as well as corresponding approval data. In instance, the LSAP distribution server of the trusted agent 515 may distribute such information outside the blockchain network to various individuals and organizations as needed. The trusted agent 520 of the aircraft server can include a record viewer such as a Pilot, Airlines Office, Lease assessment, etc.).

FIG. 3 illustrates a LSAP loading network with deployable trust-flow contract 300 of the orchestrating activities of intra organizations for generating data of the blockchain ledger of the LSAP blockchain network in accordance with an embodiment.

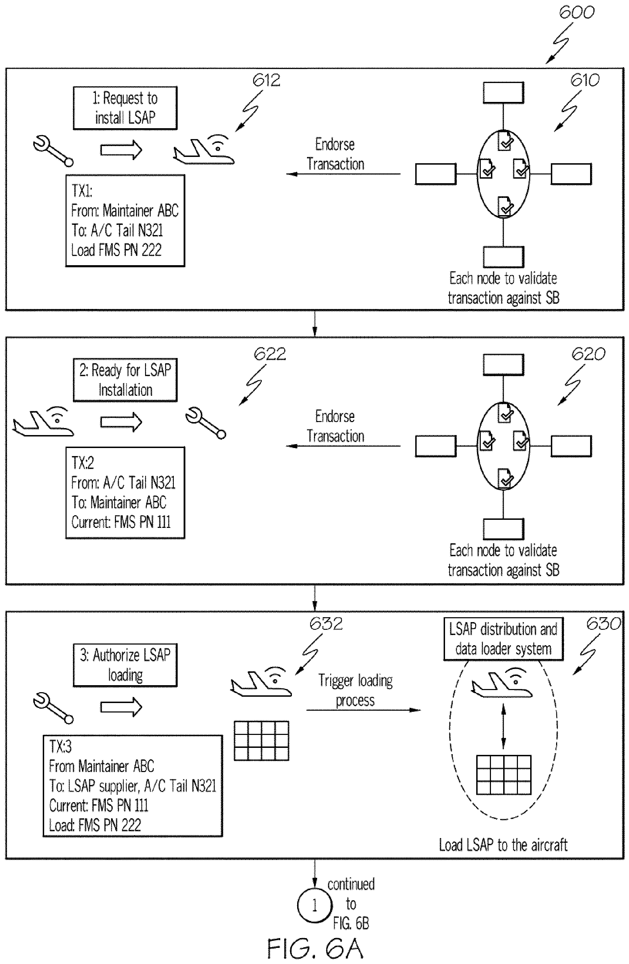

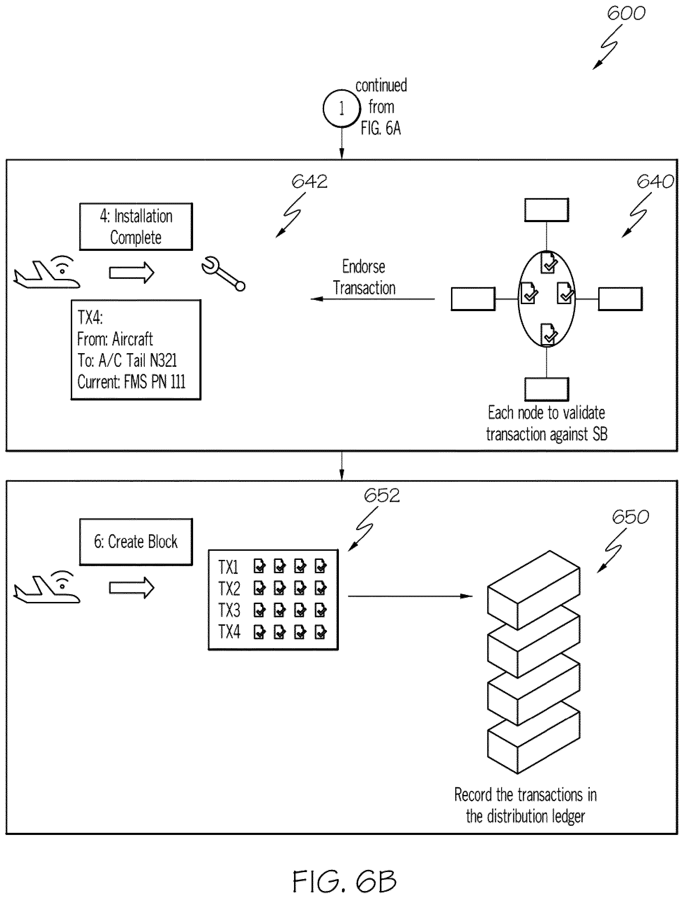

FIGS.6A and 6B illustrate a LSAP loading network with deployable TrustFlow blockchain network of the orchestrating activities of multiple organizations for generating data of the blockchain ledger of the LSAP blockchain network in accordance with an embodiment. FIGS. 6A and 6B show a work flow diagram 600 of configurable set of network rules implemented with deployable trusted workflow contracts. The workflow is contracted via agreements with the organizations of the block chain network and derived from Service bulletins or equivalent instruments. The smart contracts are defined and developed in compliance with regulatory requirements. The smart contracts may contain various sections of rules such as the following: rules to assess applicability of parts for aircraft and specific hardware; rules to verify whether the software was correctly loaded into an approved and compatible target computer, and rules for post load verification and/or test procedures required to show compliance with the guidelines specified, for example by a certification memorandum or like reference. The references may cover an approved LSAP loading procedure used or described with an Aircraft Flight Manual or Operations Manual of the aircraft, as appropriate for the particular maintenance.

In FIGS. 6A and 6B, a LSAP loading network with a semi-automated installation procedure of the orchestrating activities of multiple organizations for generating data of the blockchain ledger of the LSAP blockchain network is illustrated. The Task Transactions based on workflow contracts will ensure the secure loading of LSAPs from a remote system. The work flow diagram 600 includes the list of tasks but it is contemplated that the particular list of tasks can be changed, modified or omitted as needed and the particular list described here is merely an exemplary list of tasks for a particular block chain network configuration. The work flow diagram 600 includes: a task 610 to request to install an LSAP; a task 620 to ready the network for the LSAP installation; a task 630 to authorize an LSAP loading; a task 640 to complete the installation; and a task 650 to create the block in the block chain network.

In various exemplary embodiments, a semi-automated installation procedure may be configured with a set of trusted agents and begins with the LSAP software parts installer publishing the service bulletin for review and applicability as well as notification to the maintenance manager. A request at task 610 may include the maintenance manager creating 612 the work order for the LSAP module installation and a selected work procedure is executed for the maintenance technician. A task 620 to ready the network may include the maintenance technician to trigger the software installation at the aircraft 622. A task 630 to authorize loading may include the aircraft notifying 632 the maintenance technician to trigger the loading process. A task 650 of completion may include the status 642 of the installation and a verification of the installation determined by the inspector and in turn a notification is sent that the installation is complete to the maintenance manager, the pilot and the inspector views the report generated by the maintenance technician of the installation. Finally, when completed a block is created 452 to record the transaction in the distribution ledger at task 650.

In various exemplary embodiments, the blockchain ledger of task 650 may receive records of the service bulletin, the installation procedure, the installation status and the reports by the maintenance technician when completed. That is, in the semi-automated installation procedure, software calls may be configured for sending various steps in the process for recordation in record blocks which make up the blockchain ledger to retain a permanent record of all activities in the semi-automated LSAP installation procedure of software module updates.

In various embodiments, records of the data may be stored in the blocks of the blockchain ledger including times, dates, verification, validation, and completion of the software module installations and updates in each step of the pipeline installation procedure for future review, searching and compliance data that the service bulletins have been received, the appropriate aircrafts identified and installations of the software validated and properly completed.

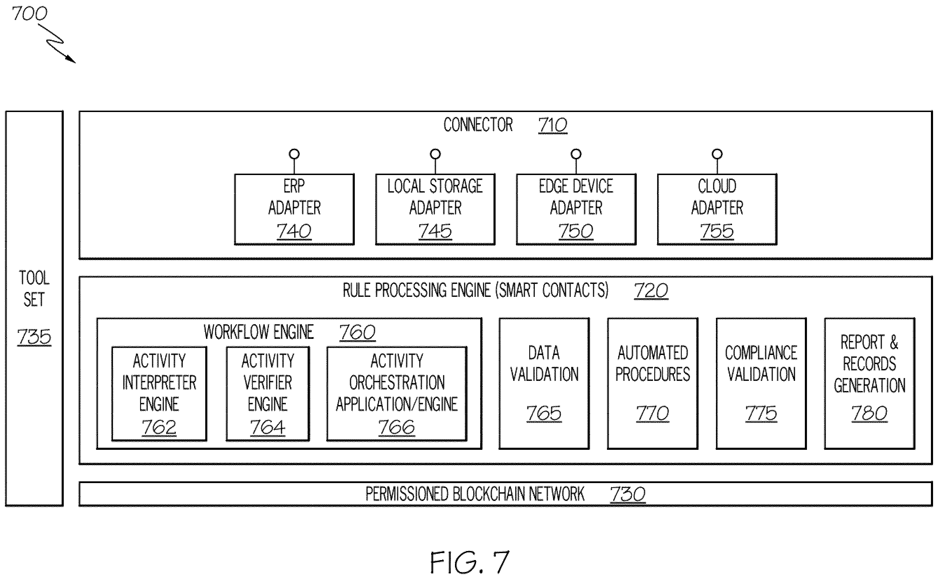

FIG. 7 illustrates an exemplary architecture for the maintenance workflow of a TrustFlow blockchain network of orchestrated activities distributed about agents in accordance with an embodiment. In FIG. 7, the architecture 700 of a TrustFlow software platform service is illustrated layer by layer with core attributes as based on a detectable distributed ledger which allows parallel applications and solutions to be processed simultaneously which in turn amplifies the value of each underlying service beneath similar to services arranged in a stack. This allows for services enabled which can be directed for heavily regulated safety critical systems like in aircrafts and include: the remote loading of LSAPs (Loadable Software Airplane parts), the digitized aircraft configuration management required, smart lease services, and the efficient automated components tracking and others.

The TrustFlow instance which is part of each automated agent/review agent activities or tasks includes the following three layers a connector layer 710, a rule processing layer 720 and permissioned blockchain network layer 730 along with supported tool sets 735. The Trust Flow Network of the permissioned blockchain network layer 730 is an underlying software layer which includes variations of blockchain protocols, which enables each member (i.e. trusted agent) to connect to each other on a private or public network (intra/internet). This permissioned blockchain network layer 730 ensures the required permissions to join/read/write/transact access to each identified member. In an exemplary embodiment, the administrator in a permissioned block chain sets a role for each identified member where each identified member is permissioned to act as only transaction validator. Hence, the permissioned blockchain network layer 730 is responsible for initially creating each block or record on the network and in addition, manages the respective block or record over a prescribed period or for an entirety. The distributed ledger is stored by the respective trusted agent in a local storage associated with the trusted agent and therefore can be considered a localized distributed storage data repository.

The rule processing layer 720 processes a set of rules of smart contract executed by participants such as trusted agents in the TrustFlow blockchain network using a configured processor engine located remotely, locally, or at a server on the aircraft depending on how the network is configured. The rule processing layer 720 includes a workflow framework execute by a workflow engine 760, a data validation application 765, automated procedures 770, compliance validation applications 775, and reporting, recording and generation applications 780 as laid out by the smart contracts and configuration of the network. The rule processing of the workflow engine 760 ensures the automation and orchestration of the workflow of the various components of the processing pipeline. The workflow engine 760 includes activity interpreter engine 762 has a framework to execute deployed workflows including independent, dependent and disparate activities on the network. The activity interpreter engine 762 uses machine interpretable activity bytecodes to provide the following functionalities of: what is the input data required for current activity? for example, a needed input data such as an aircraft (A/C) tail number, a hardware part number (P/N) etc.; identifying which trusted agent or owner is responsible for a current activity or task? for example, identifying trusted agents of a mechanic, inspector, auditor etc.; upon completion of a current activity, validating the completed current activity is successful and triggering a start of a next or subsequent activity; for example, a subsequent activity after the completion of the following: removing the hardware from the aircraft, installing software, verify the cyclic redundancy check (CRC) etc.

In various exemplary embodiments, coupled to the activity interpreter engine 762 is an activity verifier engine 764 for executing data validation applications 765, compliance validations 775, and other automated procedures 770. The activity verifier engine 764 has a framework to execute verification rules (i.e. defined by smart contracts) for corresponding tasks/activities on the TrustFlow blockchain network. This activity verifier engine 764 uses the machine interpretable verification bytecodes to provide the following functionalities of, as an example: How many nodes are required to approve the activity?; What is the validation mechanisms to be applied?; Does a part number entered manually by a technician match with a part number found on a service bulletin?.

Further, coupled to the activity verifier engine 764 and the activity interpreter engine 762 is an activity orchestrator 766 of an application or a processor engine. The activity orchestrator 766 is a machine readable deployable orchestrator (i.e. which may be configured as a file or memory) that stores intra-task functions for scheduling activities in the network which can include: tasks related to the remote software loading such as tasks of "Checking for the latest software updates"; "Staging, prioritizing, scheduling of software uploads"; "Triggering a particular software load", "Confirming a software module or code load"; "Uploading a regulatory form (i.e. an FAA form) as per template" and other tasks such as triggering the reporting reports and record generation 780 and various automated procedures 770.

The connector layer 710 include both connectors and adapters of an ERP adapter 740, a local storage adapter 745, an edge device adapter 750 and a cloud adapter 755. The connector layer 710 is an interface layer of the TrustFlow blockchain network, which includes various read-only adapters to interface and read securely the distributed ledger of the TrustFlow blockchain network. Various exemplary embodiments of the components of the connector layer 710 are the ERP adapter 740, SAP Adapter of a cloud adapter 755. The connector layer 710 can be configured with other adapters as desired. In addition, the connector layer 710 also assists in generating compliance records compliance records in the rule processing engine layer 720 of report and records generation 720 or at other locations associated with various trust agents and per custom/specialized format desired by the entities of the TrustFlow blockchain network.

The tool sets 735 and related framework of the TrustFlow blockchain network can include a variety of administrative tools for session management as well as to manage the network and particular or the entirety of trusted agents. Also, the tool sets 735 include workflow and associated rules tools to convert existing workflows and for transcoding by using rules associated with various machine readable format. The tools sets 735 are coupled to the workflow engine 760; and engines or applications of the data validation 765, the automated procedures 770, the compliance validation 775, and the report and records generation 780. Also, connectors and adapters of the tool sets 735 can be configure the various adapters to read the data securely from the distributed ledger of the network.

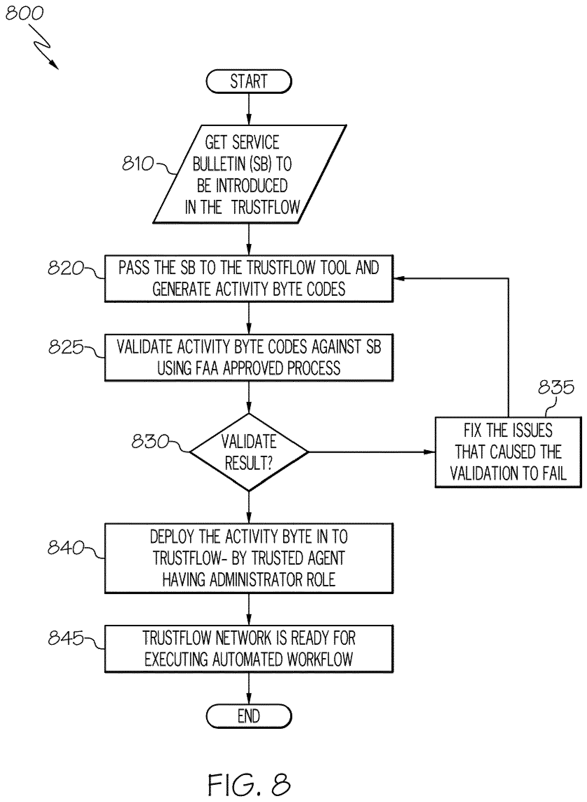

FIG. 8 illustrates a flowchart 800 to deploy a service bulletin for the maintenance workflow of a TrustFlow blockchain network of orchestrated activities distributed about agents in accordance with an embodiment. The TrustFlow network at step 810 receives the service bulletin and the service bulletin is introduced into the TrustFlow network. For example, the TrustFlow network may receive the original equipment manufacturer (OEM)/supplemental type certificate (STC) release service bulletins that requires a maintenance repair or software update. At step 820, the service bulletin is processed by the TrustFlow tools set and generates a set of activity byte codes. At step 825, the generated set of activity byte codes are validated against the service bulletin using a regulatory (i.e. FAA) approved procedure. At step 830, the results of the validation are checked by the TrustFlow network rule processing engine and if the results cannot be validated, then the flow proceeds back via step 835. In this instance, at step 835, the TrustFlow network rule processing engine will fix by a further set or subset of processes the issues related to the cause of the failure to validate the results. The flow then cycles back from step 820 repeating the steps 825 and 830 until the issue is resolved. Alternately, if the results are validated, the flow proceeds to step 840 to deploy the activity byte into the TrustFlow via a designated trusted agent associated with administrator role or tasks. After the deployment, at step 845, the TrustFlow network is ready to execute the appropriate automated workflow for the maintenance repair or software update of the aircraft.

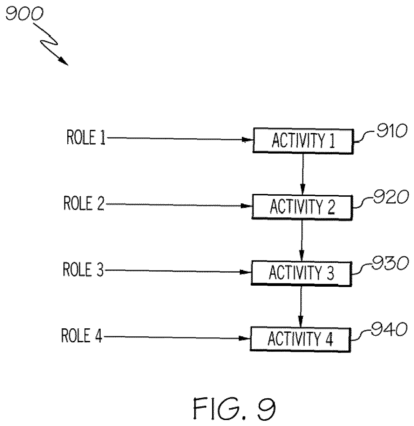

FIG. 9 illustrates a flowchart of the implementation of the workflow in the maintenance flow of the TrustFlow blockchain network of orchestrated activities distributed about agents in accordance with an embodiment. A work flow procedure is defined in the flowchart 900 in a series of activities/tasks of 910, 920, 930 and 940 independently performed but interdependent on each other and generally (though not always) performed because of the independence in a particular sequential order. In this case, the initial activities/task 910 are first performed and then in a step by step fashion, the activities/task 920 and 930 are performed until the performance of the final activities/tasks 940. Each of the activities/tasks of 910, 920, 930 and 940 are performed by only the party (or entity) given the designated role (i.e. the roles numbered from 1 to 4 which are associated with the particular party). Hence, for the role 1, the party performs activity 1 of activities/tasks 910 and so on until all the roles are completed. Once all the roles and activities/tasks are completed then the particular maintenance procedure is deemed completed.

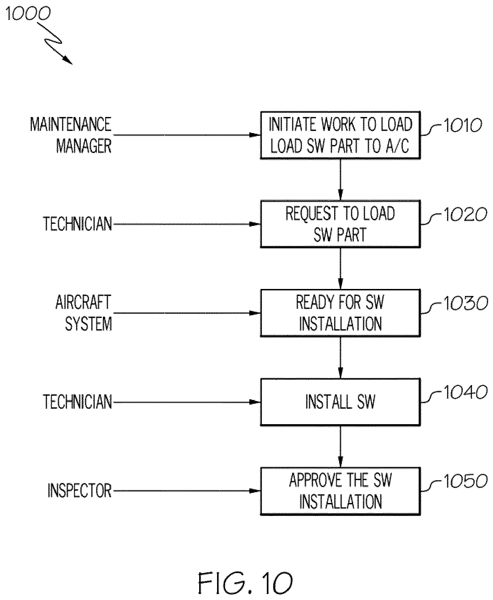

FIG. 10 illustrates a flowchart 1000 of an "Exemplary" workflow in an LSAP maintenance installation/update of the TrustFlow blockchain network of orchestrated activities distributed about agents in accordance with an embodiment. In FIG. 10 the exemplary embodiment of a (baseline) work procedure template flow for installing the software (SW) part to the aircraft is shown in the flowchart 1000. The party is designated, as an example, as either a maintenance manager, technician and so on until all the roles are possessed by a defined party of the blockchain network. In this exemplary embodiment, a party of a maintenance manager, at 1010, initiates work to load an SW part to the aircraft (A/C). Next, a party of a technician, at 1020, request to load the SW part, and then the party of the aircraft system, at 1030 provides a notification that the system is ready for the SW installation. Once the notification is received, the technician, at 1040, installs the SW in the aircraft system. After the installation, a party of an inspector, at 1050, approves the SW installation and the work procedure is realized as completed.

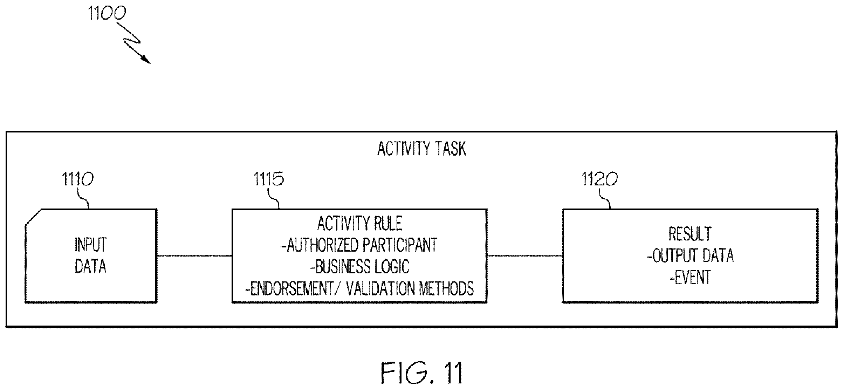

FIG. 11 illustrates a diagram 1100 of an activity or task in the maintenance flow of the TrustFlow blockchain network related to the orchestrated activities for generating data of the TrustFlow blockchain network in accordance with an embodiment. An activity or task is a discrete function, which is initiated by a blockchain network participant and executed by various systems connected to the blockchain network. An activity or task executed (or can be configured for even an instigated activity or task) will result in either an update to blockchain ledger or a trigger of an event for participants to use, receive or both the data of the ledger update and/or event to produce a software program which uses the input data from the party and applies a specific rule or set of rules. For example, the input data 1110 is processed by an activity 1115 by an authorized participant via business logic with particular endorsement and validation methodology, and generates a result 1120 of output data or an event for use by a particular party or parties.

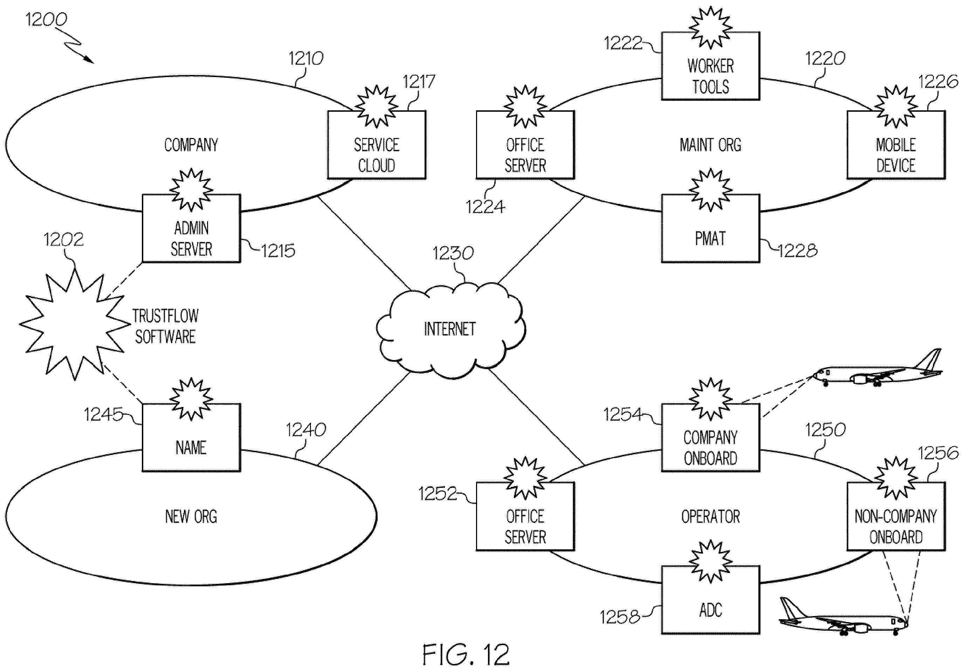

FIG. 12 illustrates a network 1200 of distributed sets of nodes of entities related to the orchestrated activities for generating data of the TrustFlow blockchain network in accordance with an embodiment. The TrustFlow blockchain network can be further defined to include various sets of sub-network of nodes distributed across multiple organizations. In an exemplary embodiment, the TrustFlow blockchain network can be considered a permissioned private network including various groups of aircrafts and organizations. In the network 1200, the TrustFlow software layer 1202 (i.e. Trusted agent) resides in each party respective sub-network. The sub-networks include a company network 1210 hosted by an admin server 1215 and connected to a service cloud 1217 and to the internet cloud 1230; a network 1220 configured for the maintenance organization including worker tools 1222, an office server 1224, a mobile device 1226, and a Portable Maintenance Access Terminal (PMAT) 1228 and the network 1220 is connected to the internet cloud 1230; a new organization network 1240 for adding new organizations and a new set of tools 1245; and finally an operator network 1250 of an office server 1252, air operator's certificate (AOC) 1258, Company onboard system 1254, and non-Company onboard system 1256 which is also connected to the internet cloud 1230. The trusted agents located in the party networks (i.e. Sub-networks) form a peer-to-peer network using blockchain protocols for validation of updates and participants. The TrustFlow networks leverages the distributed blockchain applications (of the TrustFlow software 1202) of the network 1200 to provide following core functions: the orchestration of both digital and manual workflows, the generating and archiving of sets of trusted records that have been validated by respective regulatory authorities, the managing of data privacy and control for the information shared in each network and sub-network. In addition, each organization in the network will have control over privacy rights of access and the flexibility to add/remove participants in its network. This flexibility enables each organization to create its own network and eventually establishing a sub-network of network. This sub-network can facilitate a seamless interaction between organizations/aircrafts and participants to form an interdependent (or even independent) operating virtual organization.

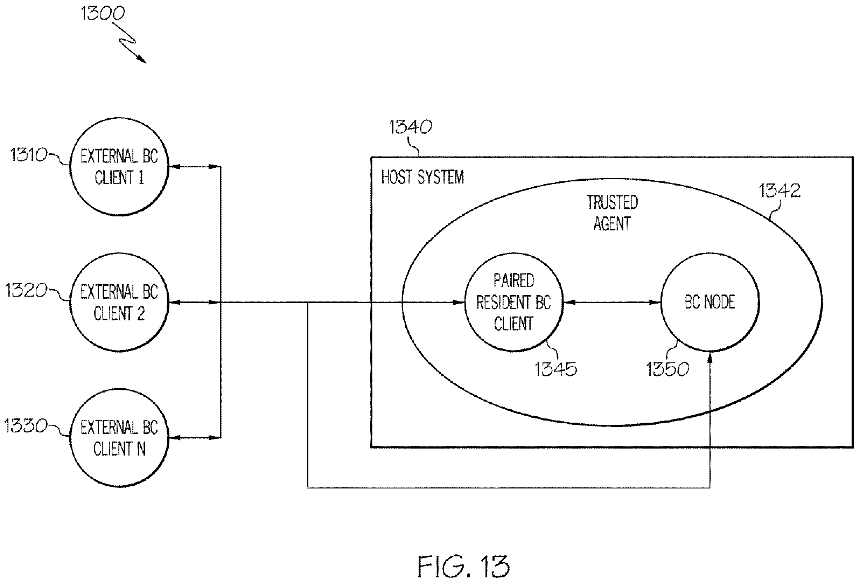

FIG. 13 illustrates an architecture diagram of a configuration of a trusted agent related to the orchestrated activities for generating data of the TrustFlow blockchain network in accordance with an embodiment. In FIG. 13 the trusted agent 1342 is designed as a pair of blockchain nodes of a paired resident blockchain client 1345 and blockchain node 1350 both of which are hosted on a same host system 1340. In addition, various external blockchain clients of client one 1310, client two 1320 to client N 1330 are connected to the paired resident blockchain client 1345 and the blockchain node 1350. The resident clients will each possess a unique identity and all the roles allocated to a particular external BC clients for that node. The resident client also assumes the role of an automated agent to automatically trigger the activities as required by the work procedure. The combination of resident client and node will host: the rule processing engine software (described in FIG. 7), and the deployable workflow procedure.

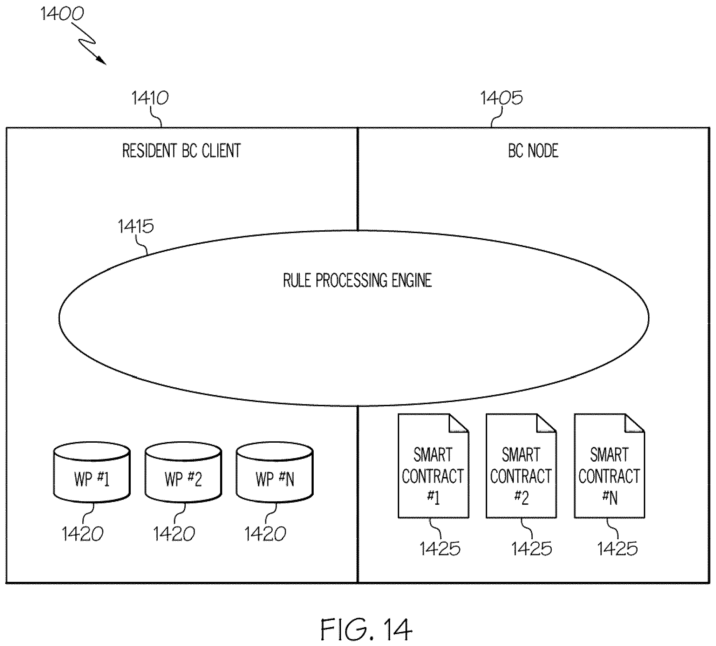

FIG 14. illustrates a diagram of software components of a trusted agent related to the orchestrated activities for generating data of the TrustFlow blockchain network in accordance with an embodiment. The trusted agent 1400 includes the resident blockchain client 1410 connected to the blockchain node 1405 with the rule processing engine 1415, the set of smart contracts 1425 and a corresponding set of work procedures (WPs) 1420.

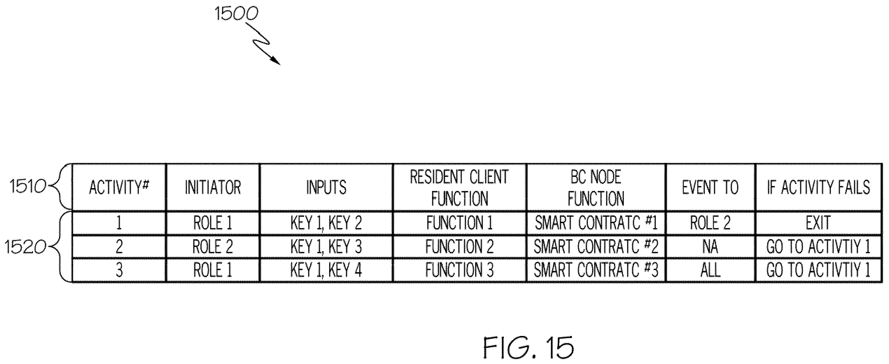

FIG. 15 illustrates a diagram of a deployable maintenance work procedure related to the orchestrated activities for generating data of the TrustFlow blockchain network in accordance with an embodiment. The deployable work procedure 1500 includes the set of parameters 1510 of an activity #, initiator, inputs, resident client function, Blockchain node function, events, and rules ex. "if the activity fails". In an exemplary embodiment, for a set of activities one to three, the work procedures 1520 are depicted with roles, keys, functions, SBs, events related to roles, and rules for activity failures.

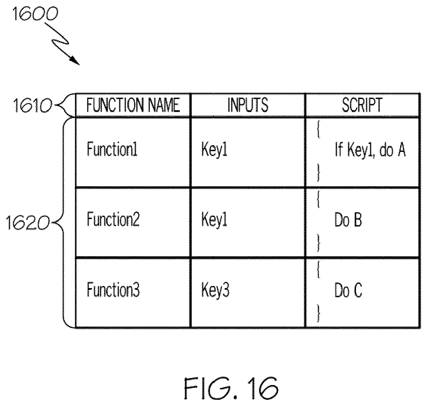

FIG. 16 a functional table of a work procedure related to the orchestrated activities for generating data of the TrustFlow blockchain network in accordance with an embodiment. The function table 1600 deployed in a work procedure includes attributes 1610 of a function name, inputs and a script. In an exemplary embodiment, a set of three functions 1620 has respective keys 1 to 3 and associated scripts.

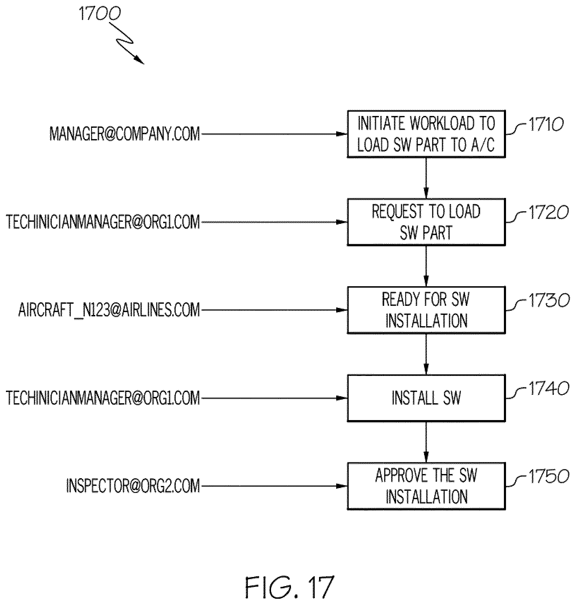

FIG. 17 illustrates a flowchart 1700 of the implementation of the workflow engine in the maintenance flow of the TrustFlow blockchain network of orchestrated activities distributed about agents in accordance with an embodiment. The flowchart 1700 illustrates the steps of the rule processing engine deployed with each work procedure of a work order. In an exemplary embodiment, the rule processing engine includes the steps shown in the flowchart 1700 as follows: Initially, at 1710, initiate work to load the SW part to the A/C; then at 1720, request the load of the SW part; Next, at 1730 ready the system for the SW installation; at 1740, install the SW part; and finally, at 1750 approve the SW part installation.

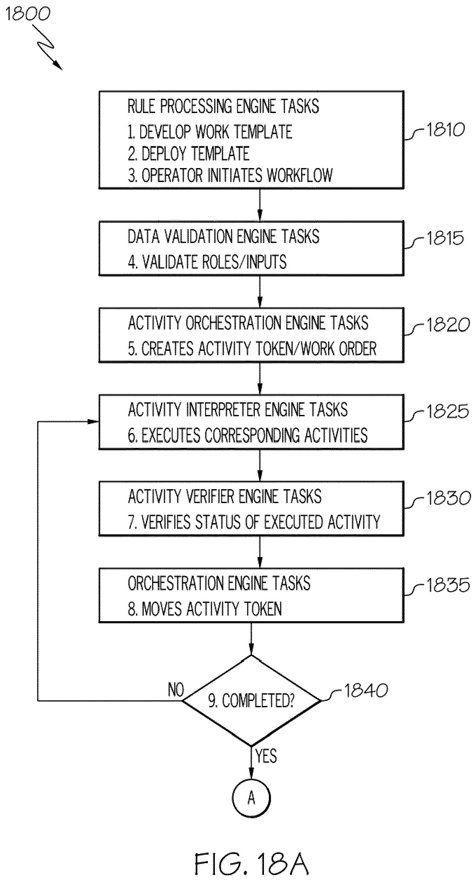

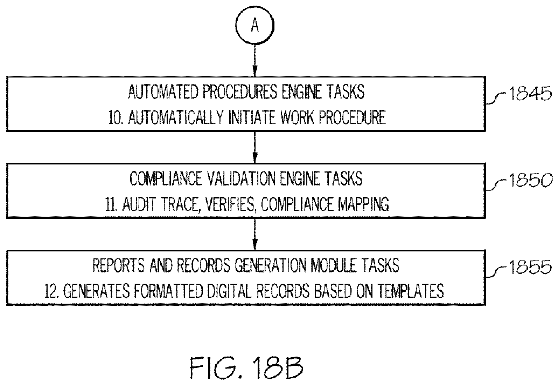

FIGS. 18A and 18B illustrate flowcharts 1800 of the TrustFlow blockchain network of orchestrated activities distributed about agents in accordance with an embodiment. The activity token includes the unique ID assigned by the rule processing engine, the hash of the work procedure template, the work order number, and the input values for the work order.

The Trusted Workflow procedure is as follows:

The rule processing engine is implemented (Tasks 1810) to perform the following Steps 1 to 3:
(1) Develop a work procedure template using the tool sets.
(2) Deploy the developed procedure template on each node.
(3) An operator initiates a workflow by invoking first activity by providing the required input.
(4) Data validation Engine will validate (Tasks 1815) the role and inputs provided by the operator against the referenced work procedure. Upon successful validation, invokes Activity orchestration Engine by passing the hash of the work procedure template.
(5) Activity orchestration Engine creates (Tasks 1820) the Activity Token / Work Order and assigns it to the current operator. Activity orchestration Engine creates the Activity Token/ Work Order (Table 1.0) and assigns it to the current operator.

**Table 1.0: Entries in Activity Token**

| **Activity Token** |
|---|
| • Unique ID assigned by Rule Processing Engine |
| • Hash of the Work Procedure template |
| • Work Order Number |
| • Input values for the work Order |

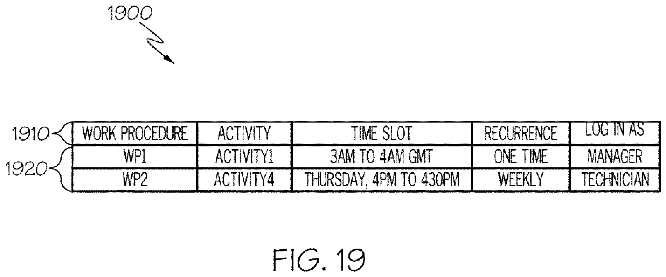

(6) Activity interpreter Engine executes (Tasks 1825) the corresponding activity from the work procedure i.e. Resident Client executes the corresponding function and BC node executes the associated smart contract.
(7) Activity Verifier Engine verifies (Tasks 1830) the status of the executed activity, then formats the output data and triggers the required event, if any.
(8) Based on the status of the current activity, Orchestration Engine moves (Tasks 1835) the activity token to next operator.
(9) Steps 6 to 8 above are repeated (Tasks 1840) till all the activities in the work procedure are successfully executed. The token will be discarded from the system upon completion.
(10) Automated procedures engine will automatically initiate (Tasks 1845) a work procedure, if configured. This engine is hosted entirely on Resident BC Client node. Based on the table configured (ex. See FIG. 19) in the Engine, the Resident Client will trigger (Tasks 1845) the activity per table.
(11) Compliance Validation Engine provides (Tasks 1850): Audit trace for regulatory agent/Auditor (ex. special role in the network) by accessing the Blockchain ledgers for selected work procedure instance and verifies the compliance to regulation, which is configured as smart contract, generates a compliance map for the artifacts of the selected work procedure instance (ex. a work order).
(12) Report and records generation module generates (Tasks 1855) formatted digital record from the BC ledger information based on the configured record template. The generated records will have digital signatures created by this engine.

FIG. 19 illustrates a configuration table 1900 for an automated procedure of the workflow engine in the maintenance flow of the TrustFlow blockchain network of orchestrated activities distributed about agents in accordance with an embodiment. The configuration table 1900 includes parameters 1910 of a work procedure, activity, time slot, recurrence, and "login in AS". In an exemplary embodiment, a set of parameters 9210 includes work procedures (WP1, WP2); activities (Activity1, Activity2); Time Slots of 3am to 4am and Thursday 4:00 PM to 4:30 PM; recurrences of one time and weekly; and log-ins as a manager and technician.

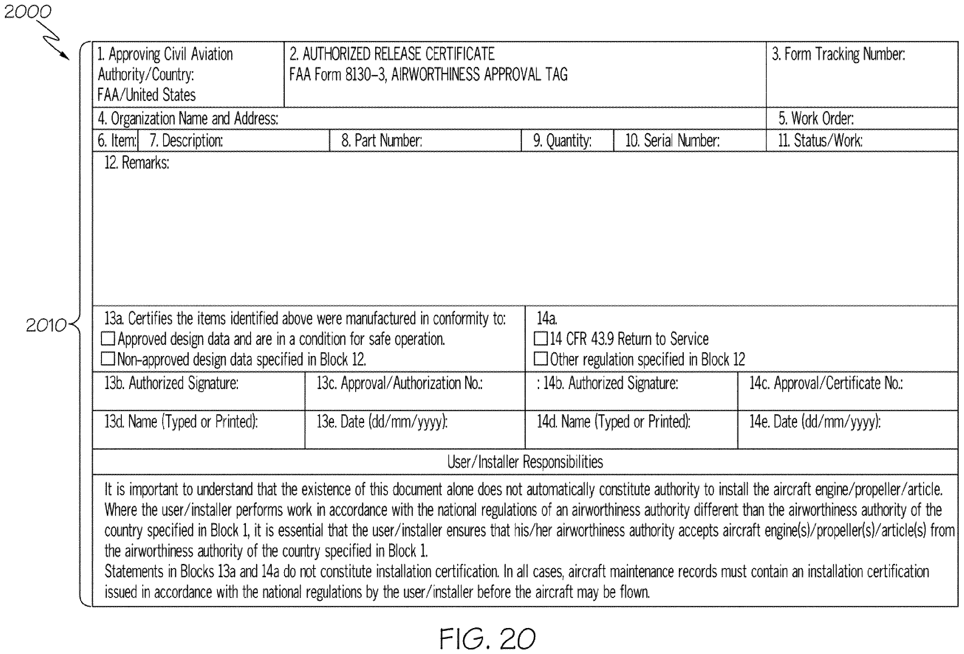

FIG. 20 illustrates a digital record 2000 for an automated procedure of the workflow engine in the maintenance flow of the TrustFlow blockchain network of orchestrated activities distributed about agents in accordance with an embodiment. The format 2010 of the digital record 2000 follows the paper form version of an FAA regulatory form in this exemplary embodiment with appropriate areas for the requested data for validation by an FAA regulator.

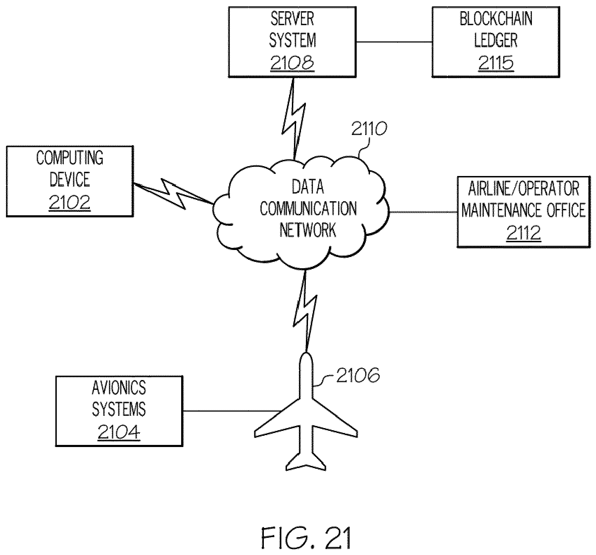

FIG. 21 is a network diagram of the TrustFlow blockchain ledger with the communication network aircraft related to the orchestrated activities for generating data of the TrustFlow blockchain network in accordance with an embodiment.

The network diagram 2100 includes the server system 2108 which, in instances, may include several server farms having blockchain ledgers 2115 enabling access of the data by multiple parties. The aircraft 2106 in communication via a data communication network 2110 with the server system 2108, the operator maintenance office 2112 and a computing device 2102 providing client access.

The computing device 2102 may be implemented by any computing device that includes at least one processor, some form of memory hardware, a user interface, and communication hardware. For example, the computing device 2102 may be implemented using a personal computing device, such as a tablet computer, a laptop computer, a personal digital assistant (PDA), a smartphone, or the like. In this scenario, the computing device 2102 is capable of storing, maintaining, and executing a blockchain network applications associated with activities of clients and organizations for loading LSAP software updates with the aircraft 2106 systems.

The aircraft 2106 may be any aviation vehicle for which LSAP updates are applicable in response to service notice bulletins. The aircraft 2106 may be implemented as an airplane, helicopter, spacecraft, hovercraft, unmanned air vehicle, or the like. The one or more avionics systems 2104 may include any system capable of receiving software updates via the communication systems of the aircraft.

The server system 2108 may include any number of application servers, and each server may be implemented using any suitable computer. In some embodiments, the server system 2108 includes one or more dedicated computers. In some embodiments, the server system 2108 includes one or more computers carrying out other functionality in addition to server operations. The server system 2108 may store and provide any type of executable applications and data that is compatible with the computing device 2102 and is related to the updating of software updates as required by service bulletins for maintenance service of an aircraft. In addition, the server system 2108 may store rules, procedures, requests etc... associated with entities of various nodes in the blockchain network for managing clients at the computing device 2102.

The computing device 2102 is usually located with the maintenance technician or onboard the aircraft 2106, and the computing device 2102 communicates with the one or more avionics systems on the aircraft 2106 via wired and/or wireless communication connection. The computing device 2102 and the server system 2108 are generally disparately located, and the computing device 2102 communicates with the server system 2108 via the data communication network 2110 and/or via communication mechanisms onboard the aircraft 2106.

The data communication network 2110 may be any digital or other communications network capable of transmitting messages or data between devices, systems, or components. In certain embodiments, the data communication network 2110 includes a packet switched network that facilitates packet-based data communication, addressing, and data routing. The packet switched network could be, for example, a wide area network, the Internet, or the like. In various embodiments, the data communication network 2110 includes any number of public or private data connections, links or network connections supporting any number of communications protocols. The data communication network 2110 may include the Internet, for example, or any other network based upon TCP/IP or other conventional protocols. In various embodiments, the data communication network 2110 could also incorporate a wireless and/or wired telephone network, such as a cellular communications network for communicating with mobile phones, personal digital assistants, and/or the like. The data communication network 2110 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

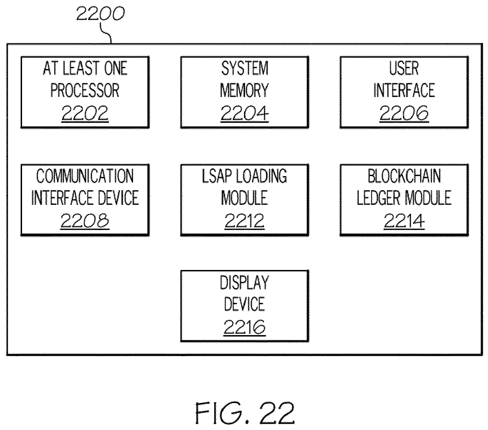

FIG. 22 is a functional block diagram of a computing device related to the orchestrated activities for generating data of the TrustFlow blockchain network in accordance with an embodiment. It should be noted that the computing device 2200 can be implemented with the computing device 1002 depicted in FIG. 10. In this regard, the computing device 2200 shows certain elements and components of the computing device 1002 in more detail.

The computing device 2200 generally includes, without limitation: at least one processor 2202; system memory 2204; a user interface 2206; a communication interface device 2208; LSAP loading module 2212; a blockchain ledger module 2214 and a display device 2216. These elements and features of the computing device 2200 may be operatively associated with one another, coupled to one another, or otherwise configured to cooperate with one another as needed to support the desired functionality- in particular, the distributed ledger is used to obtain the digital service record into a first block of the blockchain ledger in the blockchain ledger module 2214 and to initiate at least one loading and installing activity performed upon the software embedded in the aircraft to effect updating using the distributable software code and to insert into the distributed ledger of the blockchain ledger module 2214 of a second block of the blockchain storing a record of loading and installing activity by the LSAP loading module 2212 is performed.

For ease of illustration and clarity, the various physical, electrical, and logical couplings and interconnections for these elements and features are not depicted in FIG. 22. Moreover, it should be appreciated that embodiments of the computing device 2200 will include other elements, modules, and features that cooperate to support the desired functionality. For simplicity, FIG. 22 only depicts certain elements that relate to the techniques described in more detail below.

The at least one processor 2202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 2202 may be realized as one or more microprocessors, controllers, microcontrollers, or state machines. Moreover, the at least one processor 2202 may be implemented as a combination of computing devices, e.g., a combination of digital signal processors and microprocessors, a plurality of microprocessors, one or more microprocessors in conjunction with a digital signal processor core, or any other such configuration.

The at least one processor 2202 is communicatively coupled to the system memory 2204. The system memory 2204 is configured to store any obtained or generated data associated with blockchain ledger of the blockchain ledger module 2214. The system memory 2204 may be realized using any number of devices, components, or modules, as appropriate to the embodiment. Moreover, the computing device 2200 could include system memory 2204 integrated therein and/or a system memory 2204 operatively coupled thereto, as appropriate to the particular embodiment. In practice, the system memory 2204 could be realized as RAM memory, flash memory, EPROM memory, EEPROM memory, registers, a hard disk, a removable disk, or any other form of storage medium known in the art.

The user interface 2206 may include or cooperate with various features to allow a user to interact with the computing device 2200. Accordingly, the user interface 2206 may include various human-to-machine interfaces, e.g., a keypad, keys, a keyboard, buttons, switches, knobs, a touchpad, a joystick, a pointing device, a virtual writing tablet, a touch screen, a microphone, or any device, component, or function that enables the user to select options, input information, or otherwise control the operation of the computing device 2200.

In certain embodiments, the user interface 2206 may include or cooperate with various features to allow a user to interact with the computing device 2200 via graphical elements rendered on a display element (e.g., the display device 2216). Accordingly, the user interface 2206 may initiate the creation, maintenance, and presentation of a graphical user interface (GUI). In certain embodiments, the display device 2216 implements touch-sensitive technology for purposes of interacting with the GUI. Thus, a user can manipulate the GUI by moving a cursor symbol rendered on the display device 2216, or by physically interacting with the display device 2216 itself for recognition and interpretation, via the user interface 2206.

The communication interface device 2208 is suitably configured to communicate data between the computing device 2200 and one or more remote servers and one or more avionics systems onboard an aircraft. The communication interface device 2208 may transmit and receive communications over a wireless local area network (WLAN), the Internet, a satellite uplink/downlink, a cellular network, a broadband network, a wide area network, or the like. As described in more detail below, data received by the communication interface device 2208 may include, without limitation: data of the orchestrated activities by maintenance technician from issued service bulletins in clients per the rules formed by trusted workflow contracts of entities associated with nodes in servers in the blockchain network.

In various exemplary embodiments, each of the tasks is initiated by an automated agent/manual process in the network as transactions. The transactions associated with each task are verified by the contract rules which are in turn endorsing or validated by nodes in the network. Upon endorsement, each tasks or sets of task configures a block which is recorded as an immutable record in the body of the block of the block chain. An automated tamper proof records generation results in which every transaction in the network is recorded in the distributed ledger of the block chain. The ledger resides as the official maintenance record for a particular aircraft. The application software of any node in the network may depending on rights given enable a viewing of the records. In an exemplary embodiment, an inspector the FAA can perform a remote audit of the maintenance records by accessing the blockchain ledger associated with the particular aircraft without visiting the maintenance facility, and without having to inspect the aircraft in person to validate the accuracy of the record in the ledger.

In various exemplary embodiments, techniques and applications are created and/or applied for a system and a process flow for administering aircraft maintenance and verification, which is usable by a plurality of different entities each having different roles. Smart contracts are executed by a rule processing engine in a blockchain network which stores deployable workflows. The deployed workflows are employed by each rule distributed processing engine using a configured data structure for aircraft maintenance and verification-related activities. The smart contracts executed include a set of associated validation rules to be performed by selected trusted entities. An activity interpreter processing engine deployed across a plurality of different entities of trusted agents and hosted by processors of each of the plurality of different entities. The activity interpreter processing engine accesses the blockchain network on behalf of a hosting entity using a deployable workflow, to select and perform activities designated for the hosting entity and to cause a transaction record to be written to the blockchain corresponding to the performed activity. An activity verifier processing engine accesses the blockchain network on behalf of a validation compliance entity to retrieve validation rules, to select and perform a validation rule and to cause a transaction record to be written to the blockchain corresponding to the results of performance. The workflow engine accesses a plurality of administrative tools to convert a set of verification rules to a machine readable format for processing by the activity interpreter processing engine and activity verifier processing engine to manage maintenance activities of a trusted agent of each validation entity. The work flow engine updates the distributed blockchain ledger with the results of the transactional record. For example, the activity processing engine deployed within each validation entity executes a file associated with each activity processing engine of a set of machine readable inter-task functions for each scheduled current activity like a remote loading of loadable software aircraft parts (LSAP) with multiple tasks associated with each maintenance procedure. Lastly, various reports of the transaction records and process data as well as updated to the blockchain network are generated and sent to the trusted agents of, for example, a trusted agent who is designated as a validation compliance entity.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, although the schematic shown depicts one exemplary arrangement of elements, additional intervening elements, devices, features, or components may be present in an embodiment of the depicted subject matter.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit include custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, include one or more physical or logical modules of computer instructions that may, for instance, be organized as an object, procedure, or function. Nevertheless, the executables of an identified module need not be physically located together, but may include disparate instructions stored in different locations that, when joined logically together, include the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A system for administering aircraft maintenance and verification, usable by a plurality of different entities each having different roles and each employing at least one computing device capable of networked communication, comprising:
a blockchain network configured for permissioned use by the plurality of different entities via networked communication;
the blockchain network storing at least one deployable workflow as a data structure specifying aircraft maintenance and verification-related activities and associated validation rules to be performed by at least selected ones of the plurality of different entities;
a distributed rule processing engine deployed across the plurality of different entities and hosted at least in part by the at least one computing device of each of the plurality of different entities;
the distributed rule processing engine hosted on the at least one computing device at each of the plurality of different entities implementing a workflow processing engine having:
an activity interpreter processing engine that accesses the blockchain network on behalf of a hosting entity to retrieve the at least one deployable workflow, to select and perform at least one activity designated for the hosting entity and to cause a transaction record to be written to the blockchain corresponding to the performed activity; and
an activity verifier processing engine that that accesses the blockchain network on behalf of a validation compliance entity to retrieve at least one validation rule, to select and perform at least one validation rule and to cause a transaction record to be written to the blockchain corresponding to the results of performance of the at least one validation rule.

2. The system of claim 1, further comprising:
the workflow engine configured to access a plurality of administrative tools to convert a set of verification rules to a machine readable format for processing by the activity interpreter processing engine and activity verifier processing engine to manage maintenance activities of a trusted agent of each validation entity.

3. The system of claim 2, further comprising:
the activity verifier processing engine to execute the set of verification rules to regulate a current activity enabled by the machine verification activities to enable an administering of an availability of the trusted agent of each validation entity for a current activity by completing a set of actions comprising: a validation of an approval by the trusted agent for each set of actions wherein the validation requires at least one level of approval by the trusted agent.

4. The system of claim 3, further comprising:
the activity processing engine deployed within each validation entity executing by a file associated with each activity processing engine of a set of machine readable inter-task functions for at least each scheduled current activity which comprise: a remote loading of loadable software aircraft parts (LSAP) with multiple tasks associated with each maintenance procedure.

5. The system of claim 1, wherein each validation entity is at least one or more of a set of trusted agents for accessing the blockchain network which comprise: a repository, an aircraft server, a maintenance mechanic, an inspector, a maintenance facility, an aircraft owner, an OEM, and a regulator.

6. The system of claim 1, further comprising:
the activity orchestrator application of the workflow processing engine to schedule inter-task functions for a current activity in the blockchain network wherein the inter-task functions comprise: checking software updates, staging software uploads, triggering software loads, confirming loads, and uploading templates.

7. The system of claim 1, further comprising:
the activity orchestrator application reading a distributed ledger, by a plurality of adapters, associated with at least one validation entity in the blockchain network.

8. The system of claim 1, further comprising:
associating, a set of rule tools, to convert maintenance workflows and rules into a machine readable format for processing to a workflow engine and for validating data for compliance, automating procedures, generating records, and creating reports.

9. A system implementing a blockchain network for distributing at least maintenance information related to an aircraft service, the system comprises:
a plurality of trusted agents executing permissions to participate in the blockchain network to interconnect amongst each other to perform a series of actions at least comprising: accessing, reading and writing transactions associated with the blockchain network; and
a multi-layer workflow architecture for the blockchain network comprising: a first layer for creating permissions for the blockchain network, a second layer for orchestrating the workflow of the blockchain network, and a third layer for interfacing with the blockchain network and a distributed ledger,
wherein the first layer further comprises:
an activity interpreter engine using a set of machine interpretable activity bytecodes to provide functions in the blockchain network to input data for a current activity related to the aircraft service and to identify a particular trusted agent for the current activity, and an activity verifier engine using another set of machine interpretable activity bytecodes to identify the trust agent with permissions to approve a particular activity, determine a validation mechanism, and validate the inputted data,
wherein the second layer further comprises:
an activity orchestrator with machine readable inter-task functions to schedule the current activity from a plurality activities in the blockchain network,
wherein the third layer further comprises:
a plurality of adapters to read data from a distributed ledger of the blockchain network associated with each trusted agent and to interface with at least the activity interpreter and verifier engines.

10. The system of claim 9, further comprising:
a plurality of administrative tools to manage the trusted agents and to convert a set of verification rules to a machine readable format for processing by the activity interpreter and verifier engines.
